# EUROPEAN PATENT SPECIFICATION

(11) **EP 0 524 675 B1**
(45) Date of publication and mention of the grant of the patent: **02.01.2004**
(21) Application number: 92201945.0
(22) Date of filing: 30.06.1992
(51) Int. Cl.: H04L 12/56, H04B 7/26, G08G 1/0968

(54) **Method and arrangement for data transmission**
Verfahren und Schaltungsanordnung zur Datenübertragung
Procédé et dispositif de transmission de données

(30) Priority: 08.07.1991 EP 91201764
(43) Date of publication of application: 27.01.1993
(73) Proprietor: Koninklijke Philips Electronics N.V., 5621 BA Eindhoven (NL)
(72) Inventor: Zijderhand, Frans, NL-5656 AA Eindhoven (NL)
(74) Representative: Groenendaal, Antonius Wilhelmus Maria

(56) References cited:
- EP-A- 0 269 202
- NEC RESEARCH AND DEVELOPMENT no. 89, April 1988, TOKYO JP pages 8 - 15 A. FUJII ET AL. 'VSAT System (2) : AA/TDMA (Adaptive Assignment TDMA) for the VSAT Networks'
- PROCEEDINGS OF THE FOURTH INTERNATIONAL CONFERENCE ON COMPUTER COMMUNICATION September 1978, KYOTO JP pages 535 - 542 L. KLEINROCK ET AL. 'On the Measured Performance of Packet Satellite Access Schemes'
- PROCEEDINGS OF THE INTERNATIONAL CONGRESS ON TRANSPORTATION ELECTRONICS October 1990, WARRENDALE, PA US pages 209 - 215 W. E. SUCHOWERSKYJ 'Vehicle Navigation and Information Systems in Europe - An Overview'
- 41ST IEEE VEHICULAR TECHNOLOGY CONFERENCE May 1991, ST. LOUIS, MO US pages 916 - 920 T. HELLMICH ET AL. 'COMBINE: MODULAR SYSTEM FOR COMMUNICATION AND RELATIVE POSITIONING FOR SHORT-RANGE MOBILE NETWORKS'

## Description

The invention relates to a method of transmitting data from a plurality of sub-stations to a main station by way of a common channel which is subdivided into time slots the length and synchronization of which being determined by a corresponding time slot distribution of a data transmission signal transmitted by the main station, each sub-station having in each time slot a predetermined probability p to transmit a data packet.

A method of this type is known by the name of slotted ALOHA and is described, for example, in the book entitled "Computer Networks" by Andrew S. Tanenbaum, Prentice/Hall International Editions, Chapter 6, p. 253 ff. With this known method a sub-station sends a data packet which has a time length essentially corresponding to the time length of a time slot in a basically random time slot to the main station. Such a communication link to the main station will henceforth be referenced uplink. There is also a communication link from the main station to the sub-stations, which will henceforth be referenced downlink. The carrier frequency used for the downlink differs from the carrier frequency used for the uplink and is continuously monitored by all the active sub-stations. According to the known method the signal received by the main station is amplified and retransmitted, while the retransmitted signal may be received by all the active sub-stations, but is basically intended for only one specific sub-station. The transmitting sub-station too receives the data packet retransmitted by the main station and compares the data packet with its previously transmitted data packet. On the basis of the result of this comparison the sub-station determines whether the previously transmitted data packet has correctly been received and retransmitted by the main station, in which case a new data packet is transmitted, or transmission is stopped if no new data packet is present, or if an error situation occurs in which case the previously transmitted data packet is retransmitted.

A next transmission of a data packet, whether this is again the already transmitted data packet or a new data packet, is effected in a random time slot relative to the previously used time slot, the distance in time between the previously used time slot and the new time slot depending on said probability p.

The most important cause of an error situation is the concurrent transmission by two or more sub-stations. The data packet transmitted by the main station is then a combination of the two data packets received concurrently by the main station, and thus corresponds neither to the one nor to the other data packet, so that both sub-stations are to transmit their data packets once again. It will be obvious that the probability of such a data packet "collision" increases as the sub-stations transmit data packets more intensively, which causes a reduction of the user efficiency (denoted by the English term of throughput and expressed in the number of data bits received correctly per second *via* a communication channel divided by the maximum number of data bits that can be transmitted per second *via* that communication channel) of the communication channel. On the other hand, it will be obvious that when the sub-stations transmit less intensively, the probability of "colliding" data packets will be lower, it is true, but a reduction of the throughput of the communication channel may then occur as a result of reduced channel employment. The communication channel therefore has an optimum transmit load with a maximum throughput of about 37% (*cf*. for example, page 256 of above-mentioned publication).

The throughput in practice of the communication channel will generally be lower than this maximum. An important reason for this is that with the known method the probability p is to be relatively small in order to ensure that the system is not "clogged" by messages to be transmitted even in the statistically improbable but not impossible case of the load of the communication channel being temporarily much larger than the average load.

It is an object of the invention to improve the known method in general.

It is a further object of the invention to improve the known method, so that the communication channel throughput occurring in practice is increased and is, in essence, equal to the maximum throughput.

For this purpose, the method according to the invention is characterized, in that the main station monitors the load of the communication channel and compares this load with an optimum load and, on the basis of the result of this comparison, transmits control instructions to the sub-stations for modifying said probability p in response to the load of the communication channel, and in that each sub-station accordingly modifies the probability p in response to receiving said control instructions.

"EP 0 269 202 A2 discloses a dynamic frame length slotted ALOHA communication system having a central station and a number of sub-stations. The central station monitors the traffic congestion and determines the optimum frame length. This optimum frame lenght is transmitted to the sub-stations in the form of a service information message when there is to be a change in the frame length."

Further aspects and advantages of the invention will be clarified by the following description of a preferred embodiment of the method according to the invention, while reference is made to the drawing Figures, in which:
Fig. 1 shows a block diagram of a main station and a sub-station;
Fig. 2 schematically shows a road system;
Fig. 3 shows a time diagram of an uplink signal and a downlink signal;
Fig. 4 shows a curve representing the relationship between the instantaneous throughput and the instantaneous transmission load of a communication signal when the prior-art method is used; and
Figs. 5A-C show examples of the way in which the separate bits of a probability adjustment command may be distributed over various time slots.

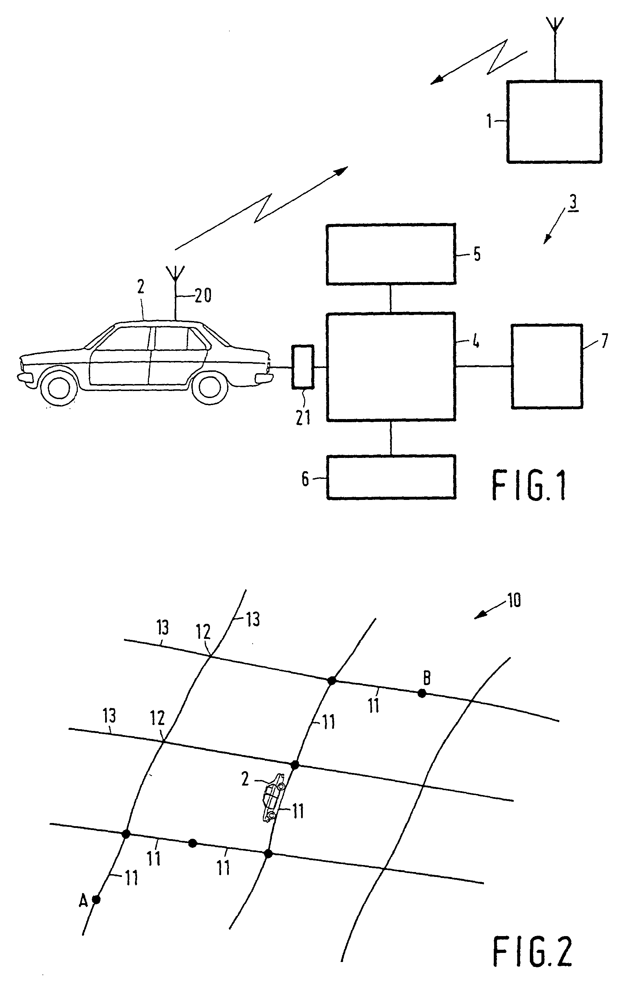

The invention is pre-eminently suitable for use in a traffic navigation system known *per se* and will therefore be discussed hereinafter by way of illustrative example in conjunction with a traffic navigation system in which a main station 1 continuously sends out navigation information for a plurality of vehicles 2 located in a coverage area of the main station 1, no more than a single vehicle being represented in Fig. 1, and the vehicles comprising each a sub-station 3 with a navigation computer 4. The navigation computer 4 which is represented outside the vehicle 2 for clarity in Fig. 1 but is generally naturally on board the vehicle 2, comprises a static memory 5, for example a CD ROM, in which basic data are stored relating to the road system in at least said coverage area. Furthermore, the navigation computer 4 comprises an input element 6, for example a keyboard, by which a user may input data relating to, for example, his point of departure and his destination. On the basis of, for example, the point of departure, the destination and the basic data of the road system stored in the memory 5, the navigation computer 4 computes the route to be followed and informs the user of this route *via* a display device 7. The display device 7 may comprise, for example, a picture screen and/or a loudspeaker through which instructions may be given to the user.

Auxiliary information is transmitted by the main station 1 by way of the downlink. The auxiliary information relates to situations differing from the situations stored in the memory 5. An example of such a different situation may be, for example, a road closed to traffic due to an accident or works, or a newly opened road. Another example is the situation in which there is a tailback on a specific road.

Although it is possible to arrange the traffic navigation system in such a way that a sub-station 3 announces its point of departure and its destination to the main station 1 and that the main station 1 on the basis of this information transmits to this sub-station 3 only the auxiliary information relevant to that sub-station 3, this is not desired in practice. The major reason for this is the protection of privacy of the users of the traffic navigation system, that is to say, the drivers of the vehicles 2. Therefore, said auxiliary information is transmitted as information available to any user. For receiving the auxiliary information each sub-station 3 has an aerial 20 and an interface 21 for transferring the received information to the navigation computer 4. In the navigation computer 4 of the vehicle 2 it is then determined which auxiliary information relates to the route to be followed by that vehicle 2 and, possibly, the route to be followed is adapted to the current situation.

A limiting factor of the reliability of such a traffic navigation system is the speed with which such auxiliary information is adapted to changing current situation. For example, when there is an accident it is important that the auxiliary information is adapted immediately, on the one hand, for the other road users to avoid delay and, on the other hand, generally for avoiding tailbacks being formed on the road, so that emergency services can reach the place of the accident very fast.

For improving the reliability of the described prior-art traffic navigation system, according to an important aspect of the present traffic navigation system, each sub-station 3 transmits to the main station 1 information relating to the accessibility of a section just covered by the vehicle 2 concerned. This information about the accessibility of the section generally relates to the average speed with which a specific section can be covered but may also relate, for example, to temperature in connection with the chance of black ice.

Fig. 2 diagrammatically shows a part of a road system 10 on which a vehicle 2 moves from a point of departure A to a destination B. The road system 10 is subdivided into sections 11 in a predetermined manner. The manner in which this subdivision has taken place is not important for a proper understanding of this invention and will therefore not be further described. It should only be observed, however, that this subdivision need not be identical with the subdivision obtained from crossroads 12 of roads 13.

Always when the vehicle 2 leaves a section 11, the navigation computer 4 produces a message containing information relating to the identity of the section 11 concerned and, for example, the average speed and travelling time respectively, the vehicle 2 has reached in the section 11, and this message is sent to the main station 1. Such a message may comprise various data packets which are each to be transmitted in a respective time slot. Again for protection of the privacy of the users of the traffic navigation system the message generally has no information relating to the identity of the sender.

It should be observed that producing and transmitting such messages may also be effected when the driver of the vehicle 2 does not make use of the navigation system as such, that is to say, is not guided by the navigation computer 4 for the selection of his route.

It will be obvious that in practice the relevant section 11 will be driven by a plurality of vehicles 2, so that the main station 1 receives a plurality of independent "measurements" relating to the average speed or travelling time which is apparently feasible in the section 11.

It will also be obvious that a delay in the data packet production and data packet transmission of the order of several seconds or even minutes is acceptable. Although such a delay is to be considered considerable in communication technology, and unacceptable for example for relaying telephone conversations, a time scale of several seconds may be considered "direct" for passing on traffic information.

The nature of the contents of the message even permits the total loss of several messages: for this matter, the main station 1 receives a plurality of messages relating to the same section 11, whereas the contents of such a message, though extremely useful, are only to be considered auxiliary information.

For completeness' sake it should be observed that a data packet may also contain information of a different type. For example, a taxi or a goods transport vehicle may send information relating to its location to the main station 1, in which case the main station 1 acts as a relay station for sending this information to a central station of the relevant taxi or haulage business. A vehicle 2 may also transmit an emergency message, for example, if this vehicle 2 is involved in an accident.

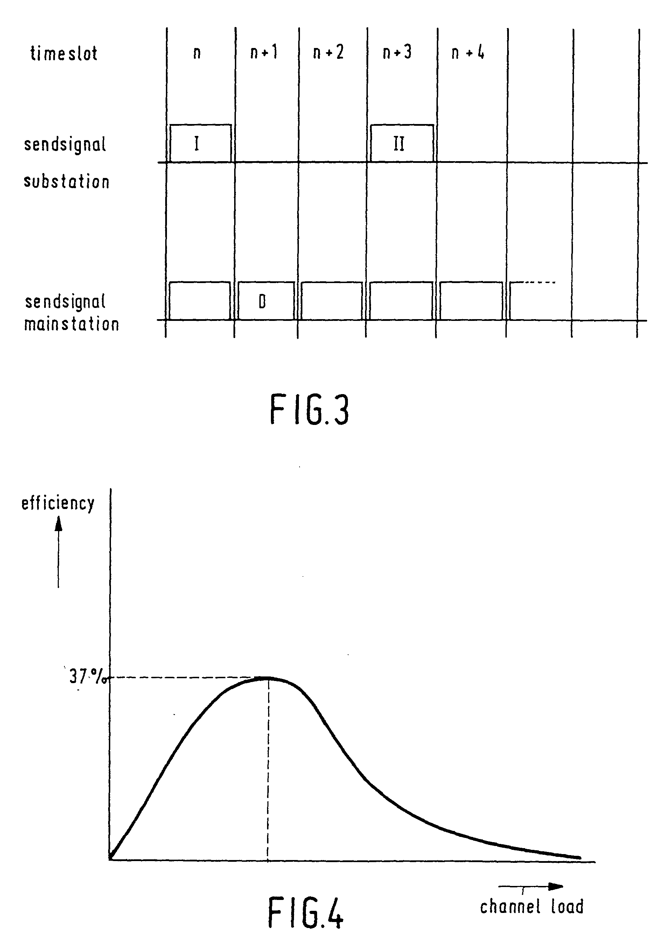

Fig. 3 shows a time diagram of the transmission of a message by a sub-station 3 while an embodiment of a data transmission protocol according to the invention is utilized.

In a specific time slot n the sub-station 3 sends the first data packet I of the message to the main station 1 (uplink). Although the invention is also applicable to the case where the main station 1 acts as a relay station for the data packets, such as, for example in satellite communication, the data packet I received by the main station 1 in above example of a navigation system is not relayed, but processed by the main station 1 itself. In that case the main station 1 is arranged for detecting whether the received data packet I is received correctly or in a disturbed manner, an example of the disturbed reception being given in the case where two sub-stations transmit a data packet in the same time slot. For detecting whether the reception is correct or disturbed, each data packet may comprise check bits.

By way of illustration there will now be a brief description of such a detection. If the main station 1 does not detect any signal strength of the uplink carrier frequency in a specific time slot, the main station deduces that none of the sub-stations has transmitted a data packet in this time slot. If the main station 1 does detect signal strength of the uplink carrier frequency in a specific time slot, the main station 1 performs a check procedure with the aid of the check bits. Depending on the result of this check procedure the main station deduces whether the data packet has been received correctly or not.

In the time slot n+1, subsequent to the time slot n, the main station 1 transmits a data packet D intended for all the active sub-stations 3 (downlink), in which data packet D at least a single data bit is indicative of the receive condition of the data packet I received in the time slot n. On the basis of the value of this receive condition bit said sub-station 3 decides whether a next data packet II to be transmitted is to be again the data packet I transmitted in the time slot n, when the receive condition bit received in the time slot n+1 is indicative of a disturbed reception, or whether the next data packet II to be transmitted may be a second data packet.

It should be observed that the manner in which the data bits of the data packets are coded is not relevant to a proper understanding of the present invention, so that a further description of this coding will be omitted here.

Neither is it important for a proper implementation of the method according to the present invention how many data bits a data packet contains and what position the receive condition bit has in the data packets to be transmitted by the main station 1. By way of example, each data packet D to be transmitted by the main station 1 first comprises a predetermined number of alternating synchronizing (sync) bits and the next bit is the receive condition bit while, also by way of example, the value "0" for the receive condition bit may be indicative of a disturbed reception and the value "1" for the receive condition bit is indicative of a correct reception.

With effect from the time slot n+2 the sub-station 3 can transmit the next data packet II. In each time slot the transmission probability p has a predetermined value, while the probability of non-transmission is equal to 1-p. Therefore, the "number" of the actual time slot in which the sub-station 3 transmits the next data packet II, time slot n+3 in the example illustrated in Fig. 3, is not known in advance and the time distance between two consecutive time slots in which the sub-station 3 transmits a data packet will constantly change. In this connection it should only be observed that the probability of the next data packet still not being transmitted in time slot n+1+x is equal to (p^{x}) for x ≥ 1.

After the transmission of the second data packet the above-described cycle again takes place until the last data packet of said message has been transmitted (and received correctly).

With the method described above there is an advantage that no transmission time in the downlink needs to be spent on repeating the received data packets, whereas yet a "reception acknowledgement" can be transmitted to each receiver. It should be considered that such a "reception acknowledgement" will only mean something to the sub-station that has transmitted a data packet during the preceding time slot.

A further improvement is obtained if a receive condition bit is also used for reserving a next time slot for the relevant sub-station. As already observed hereinbefore, the "reception acknowledgement" is only of importance to a sub-station that transmitted a data packet during a preceding time slot and the reserved time slot will only be reserved for said sub-station. In an embodiment a receive condition bit indicative of a correct reception and transmitted in time slot n+1 implies a reservation of the time slot n+2 for the relevant sub-station. Starting from the time slot n+2 the sub-station can constantly transmit in the time slots n+2, n+4, n+6 etc., a receive condition bit being transmitted by the main station in the time slots n+3, n+5 and n+7 etc. Since all the other stations receive the receive condition bit in the time slots n+1, n+3, n+5, n+7 etc. and, if this is indicative of a correct reception, understand that the time slots n+2, n+4, n+6 etc. have been reserved for another sub-station (without knowing which sub-station), they will not transmit in the time slots n+2, n+4, n+6 etc., so that the data packet of the sub-station that is really transmitting does not run the risk of colliding with other data packets. Consequently, the efficiency of the uplink is improved, so that the probability of incorrect reception is reduced.

When said sub-station has finished transmitting data packets, it may simply stop transmitting. The main station then receives no signal in the relevant time slot n and reacts to the suspended reception by transmitting a receive condition bit indicative of a disturbed reception, so that the time slot n+2 becomes available for use to any sub-station.

It will be evident that the instantaneous load of the uplink communication channel is proportional to p and to the number of sub-stations that attempt to transmit a message. As is known, the instantaneous throughput of the uplink communication channel depends on its instantaneous load as shown by the curve of Fig. 4 (*cf*. Fig. 6.3 of said publication). A measure for the instantaneous throughput is provided by the average number of data packets correctly received per time unit divided by the maximum number of data packets that can be transmitted over the relevant uplink communication channel during that time unit. Since the latter number for the communication channel concerned is a constant value, said division may be omitted.

On the basis of the instantaneous throughput, as is represented by the average number of data packets received correctly per unit of time, in each substation the probability p is adapted according to the invention so as to obtain an optimum load of the relevant communication channel, that is to say, a load for which the instantaneous throughput is, though approximately, equal to the maximum attainable throughput of about 37%.

Such an adaptation may be carried out by each sub-station when the main station transmits to all the active sub-stations a predetermined number of bits, preferably two, in predetermined time slots, for example in each time slot, for controlling the adjustment of the probability p in each sub-station. In addition, in a simple case the contents of the probability adjustment bits may be indicative of either the command "do not change" or the command "increase", or the command "reduce', while the instantaneous value of the probability p is increased or reduced respectively, by a predetermined value when an "increase" command or a "reduce" command is received.

It is impossible, however, to ensure that all the active sub-stations transmit with the same probability p, which is deemed desirable from a "democratic" point of view.

Therefore, preferably the probability adjustment bits transmitted by the main station are indicative of an absolute value of the probability p, each sub-station automatically adjusting the instantaneous value of the probability p to said absolute value when a probability adjustment command represented by the probability adjustment bits is received.

It should be observed that it may be desirable to use a relatively large number of probability adjustment bits to make a rather accurate adjustment of the probability p over a relatively large range of values possible. It is true, all the probability adjustment bits may be transmitted again in each time slot, so that in each time slot an adjustment of the transmit probability of the sub-stations 3 is possible, but this will restrict the number of free information bits that may be transmitted by the main station in each time slot. According to an aspect of the invention, however, it is likewise possible to spread out the successive probability adjustment bits over a plurality of time slots, it even being possible that in each time slot not more than a single one of the probability adjustment bits is transmitted. This does restrict the "frequency" with which probability adjustment is possible, but it will not be unacceptable in practice.

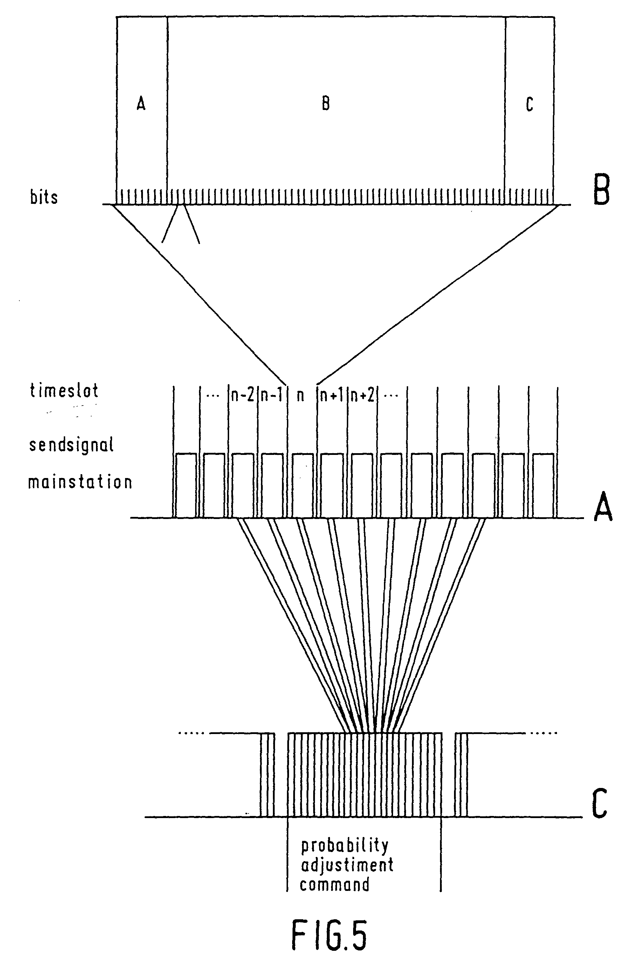

An example of a protocol for transmitting probability adjustment commands will now be discussed with reference to Fig. 5.

Fig. 5A shows, as does Fig. 3, the send signal of the main station in a plurality of successive time slots.

Fig. 5B more specifically shows the structure of a data packet transmitted in a single time slot: a predetermined number of message bits B preceded by a predetermined number of sync bits A and followed by a predetermined number of check bits C. Although Fig. 3 represents the send signals belonging to the different time slots as separate blocks for clarity, which suggests that they are separated by a "signal gap", a continuous send signal may be transmitted in practice while the actual separation in time slots is realised by the sync bits A. The manner in which the values of the separate bits are coded by the carrier is unimportant for a proper understanding of the invention and will be known *per se* to an expert, so that this will not be discussed any further.

In the example illustrated in Fig. 5 the third message bit is a probability adjustment bit. Fig. 5C shows that the combination of a predetermined number of probability adjustment bits associated to consecutive time slots defines a probability adjustment command. Such a probability adjustment command may have a structure of a predetermined number of header bits followed by a predetermined number of probability bits, which may be followed by a predetermined number of check bits. The probability bits may be a direct binary encoded representation of the absolute value of the probability p. If the number of probability bits is equal to 10, the probability p may be set between 0 and 0.1024 with a resolution of 0.0001. The probability bits, however, may also refer to a Table of values for the probability p, which Table is present in the memory of each sub-station. If the number of probability bits is equal to 10, this Table may comprise 1024 preselected possible absolute values of the probability p, while the differences between consecutive possible absolute values of the probability p need not be equal.

To provide a good distinction between the header bits and the probability bits, and to ensure that not a single combination of a number of header bits with a number of subsequent probability bits or a combination of a number probability bits with a number of subsequent header bits may erroneously be interpreted as the header, the number of header bits is preferred to be greater than the number of probability bits. For example, when the number of above probability bits is equal to 10, the number of header bits is equal to 15 and the header has the value of 001010101010100.

During a sampling time interval the main station 1 investigates for each time slot in that time interval which of the following situations occurs in a specific time interval:
1) the time slot is empty, that is to say, none of the sub-stations has transmitted a data packet;
2) a data packet has been received correctly in the time slot;
3) a data packet has not been received correctly in the time slot, which is most probably caused by a "collision" between at least two concurrently transmitted data packets.

During this operation the main station 1 counts how often said situations 1), 2) and 3) occur in the sampling time interval. It should be observed that ideally a fixed average percentage of time slots will be empty (37%), a fixed percentage of time slots will exhibit correct reception (37%) and a fixed percentage of collisions will occur (26%). When the load on the communication channel is too heavy, the percentage of empty time slots will be smaller than 37 % and the percentage of collisions will be greater than 26 %, whereas in the case of a smaller throughput than 37 % as a result of the communication channel being used too little, the percentage of empty time slots will be greater than 37% and the percentage of collisions will be smaller than 26%. By comparing the measured percentages with the ideal percentages, the main station 1 determines whether the load of the communication channel differs from the ideal load and to what extent, and on the basis thereof the main station 1 decides whether the probability p is to be changed and to what extent.

It should be observed that the messages to be transmitted may be classified in various categories and that the probability p may be different for messages of different categories. For example, in addition to above messages relating to section information (to be termed category I hereinafter), also messages intended for a haulage business and relating to the localization of the vehicle (to be termed category II hereinafter), and emergency messages (to be termed category III hereinafter) may be transmitted. Category III messages have priority over category I and II messages and, for example, have a fixed large send probability p of 1/20.

Category II messages may have priority over category I messages and may also have a higher send probability. In the scope of the invention the probability p(II) for category II messages can be controlled directly from the main station, irrespective of the control of the probability p(I) for category I messages, but in a simple embodiment there is a fixed relationship between the probabilities p(I) and p(II) = 10-p(I), where the probability p(I) is controlled from the main station as described hereinbefore and the probability p(II) is computed in the sub-station concerned. It should be observed that not every sub-station needs to be arranged for transmitting category II messages.

All this implies that there is first determined in the sub-station whether messages in the category III are to be transmitted. If so, these messages are transmitted with the associated channel access probability p(III). If not, there is determined in the sub-station whether messages in the category II are to be transmitted. If so, these messages are transmitted with the associated channel access probability p(II). If there are no messages to be transmitted in the II and III categories, any messages in the category I are transmitted with the associated channel access probability p(I). Therefore, in practice it may occur that a specific message in the category I experiences considerable delay before being transmitted. Although this is no objection as such, as has already been observed hereinbefore, it will be evident that there will no longer be a need for receiving the message concerned after some time. The sub-station may therefore be arranged for deleting from its memory a specific message that has already been waiting for a specific amount of time, for example, five minutes, and not transmitting same. Such a line of thought also relates to the messages of the category II: a haulage business is generally interested in the current location of its vehicles, but not in information about their locations of, for example, an hour previously. "Rejecting" the belated messages thus reduces the load of the communication channel, which load reduction will specifically occur when there are large delays *i*.*e*. when there is a large channel load.

It will be evident to the expert that it is possible to change or modify the represented embodiment of the method according to the invention without distracting from the inventive idea or scope of protection of the invention. For example, it is possible for a data packet transmitted by the main station in a specific time slot to be used at least partly for transmitting a complete probability adjustment command.

## Claims

1. Method of transmitting data from a plurality of sub-stations (3) to a main station (1) by way of a common channel which is subdivided into time slots (n, n+1) the length and synchronization of which being determined by a corresponding time slot distribution of a data transmission signal transmitted by the main station (1), each sub-station (3) having in each time slot (n, n+1) a predetermined probability p to transmit a data packet (I, II), **characterized in that** the main station (1) monitors the load of the communication channel and compares this load with an optimum load and, on the basis of the result of this comparison, transmits control instructions to the sub-stations (3) for modifying said probability p in response to the load of the communication channel, and **in that** each sub-station (3) accordingly modifies the probability p in response to receiving said control instructions.

2. Method as claimed in claim 1, **characterized in that** the main station (1) detects in each time slot (n, n+1) whether a data packet (I, II) has been received or not in the relevant time slot (n, n+1), and if so, whether the data packet (I, II) received in the relevant time slot (n, n+1) has been received correctly or not; **in that** the main station (1) for a predetermined length of time counts the number of time slots (n, n+1) in which no data packet, a correct data packet or an incorrect data packet has been received respectively or calculates the respective percentages; **in that** the main station (1) compares the counting results or percentages with the respective counting results or percentages as they would occur in the situation of an optimum load of the communication channel; and **in that** the main station (1) sends out said control instructions on the basis of the result of this comparison.

3. Method as claimed in claim 2, **characterized in that** said control instructions incite each sub-station (3) to increasing the instantaneous value of the probability p if the counting result or the percentage relating to the number of time slots (n, n+1) in which no data packet (I, II) has been received exceeds at least to a predetermined extent the relevant counting result or percentage in the optimum situation and/or if the counting result or the percentage relating to the number of time slots (n, n+1) in which an incorrect data packet (I, II) has been received is smaller at least to a predetermined extent than the relevant counting result or percentage in the optimum situation; and **in that** said control instructions incite each sub-station (3) to reducing the instantaneous value of the probability p if the counting result or the percentage relating to the number of time slots (n, n+1) in which no data packet (I, II) has been received is smaller at least to a predetermined extent than the relevant counting result or percentage in the optimum situation and/or if the counting result or the percentage relating to the number of time slots (n, n+1) in which an incorrect data packet (I, II) has been received exceeds at least to a predetermined extent the relevant counting result or percentage in the optimum situation.

4. Method as claimed in one of the preceding claims, **characterized in that** the main station (1) transmits a predetermined number of bits in predetermined time slots so as to control the adjustment of the probability p in each sub-station (3).

5. Method as claimed in one of the preceding claims, **characterized in that** no more than one bit in each time slot operates as a bit of a probability adjustment command.

6. Method as claimed in one of the preceding claims, **characterized in that** the contents of the probability adjustment bits are indicative of an absolute value of the probability p.

7. Method as claimed in one of the preceding claims, **characterized in that** a memory is associated to each sub-station (3), which memory stores a Table of possible values of the probability p, and **in that** the contents of the probability adjustment bits are indicative of a position in said Table of the probability p value to be adjusted.

8. Communication system comprising: a main station (1) and at least one sub-station (3), the sub-station (3) being arranged for receiving information from the main station (1) as well as sending information to the main station (1), the main station (1) being arranged for sending information to the sub-station (3) as well as receiving information from the sub-station (3); **characterized in that** the main station (1) and the at least one sub-station (3) are arranged for communicating with each other while implementing the method of data transmission as claimed in one of the preceding claims.

9. Traffic navigation system comprising: for use on board of a vehicle (2) at least one sub-station (3) with a navigation computer (4), the navigation computer (4) comprising a static memory (5) in which road system information is stored; a main station (1) arranged for transmitting auxiliary information and for receiving information from the at least one sub-station (3); the sub-station (3) being arranged for receiving said auxiliary information and for sending information to the main station (1); **characterized in that** the main station (1) and the at least one sub-station (3) are arranged for communicating with each other while implementing the method of data transmission as claimed in one of the claims 1 to 7.

10. Sub-station (3) for receiving auxiliary information from a main station (1) and for sending information to the main station (1), **characterized in that** the sub-station (3) is arranged for communicating with the main station (1) while implementing the method of data transmission as claimed in one of the claims 1 to 7.

11. Main station (1) for sending information to a sub-station (3) as well as receiving information from the sub-station (3), **characterized in that** the main station (1) is arranged for communicating with the sub-station (3) while implementing the method of data transmission as claimed in one of the claims 1 to 7.

## Patentansprüche

1. Verfahren zum Übertragen von Daten aus einer Anzahl Nebenstationen (3) zu einer Hauptstation (1) mit Hilfe eines gemeinsamen Kanals, das in Zeitschlitze (n, n+1) aufgeteilt ist, wobei die Länge und die Synchronisation derselben durch eine entsprechenden Zeitschlitzverteilung eines Datenübertragungssignals bestimmt wird, das von der Hauptstation (1) übertragen wird, wobei jede Nebenstation (3) in jedem Zeitschlitz (n, n+1) eine vorbestimmte Wahrscheinlichkeit p hat zum Übertragen eines Datenpakets (I, II), **dadurch gekennzeichnet, dass** die Hauptstation (1) die Belastung des Kommunikationskanals überwacht und diese Belastung mit einer optimalen Belastung vergleicht und auf Basis des Ergebnisses dieses Vergleichs Steuerinstruktionen zu den Nebenstationen (3) überträgt zum Modifizieren der genannten Wahrscheinlichkeit p in Reaktion auf die Belastung des Kommunikationskanals, und dass jede Nebenstation (3) auf entsprechende Weise die Wahrscheinlichkeit p modifiziert, und zwar in Reaktion auf den Empfang der genannten Steuerinstruktionen.

2. Verfahren nach Anspruch 1, **dadurch gekennzeichnet, dass** die Hauptstation (1) in jedem Zeitschlitz (n, n+1) detektiert, ob in dem betreffenden Zeitschlitz (n, n+1) ein Datenpaket (I, II) empfangen worden ist oder nicht, und wenn ja, ob das in dem betreffenden Zeitschlitz (n, n+1) empfangene Datenpaket (I, II) einwandfrei empfangen worden ist oder nicht; dass die Hauptstation (1) während einer vorbestimmten Zeit die Anzahl Zeitschlitze (n, n+1) zählt, in denen kein Datenpaket, ein einwandfreies Datenpaket oder ein nicht einwandfreies Datenpaket empfangen worden ist, oder die betreffenden Prozentsätze berechnet; dass die Hauptstation (1) die Zählergebnisse oder Prozentsätze mit den betreffenden Zählergebnissen oder Prozentsätzen vergleicht, wie diese in der Situation einer optimalen Belastung des Kommunikationskanals auftreten würden; und dass die Hauptstation (1) die genannten Steuerinstruktionen auf Basis des Ergebnisses dieses Vergleichs aussendet.

3. Verfahren nach Anspruch 2, **dadurch gekennzeichnet, dass** die genannten Steuerinstruktionen jede Nebenstation (3) dazu bringen, den augenblicklichen Wert der Wahrscheinlichkeit p zu erhöhen, wenn das Zählergebnis oder der Prozentsatz in Bezug auf die Anzahl Zeitschlitze (n, n+1), in denen kein Datenpaket (I, II) empfangen worden ist, wenigstens zu einem vorbestimmten Betrag das betreffende Zählergebnis oder den Prozentsatz in der optimalen Situation übersteigt und/oder wenn das Zählergebnis oder der Prozentsatz in Bezug auf die Anzahl Zeitschlitze (n, n+1), in denen ein nicht einwandfreies Datenpaket (I, II) empfangen worden ist, um wenigstens einen vorbestimmten Betrag kleiner ist als das betreffende Zählergebnis oder der Prozentsatz in der optimalen Situation; und dass die genannten Steuerinstruktionen jede Nebenstation (3) dazu bringen, den augenblicklichen Wert der Wahrscheinlichkeit p zu reduzieren, wenn das Zählergebnis oder der Prozentsatz in Bezug auf die Anzahl Zeitschlitze (n, n+1), in denen kein Datenpaket (I, II) empfangen worden ist, um wenigstens einen vorbestimmten Betrag kleiner ist als das betreffende Zählergebnis oder der Prozentsatz in der optimalen Situation und/oder wenn das Zählergebnis oder der Prozentsatz in Bezug auf die Anzahl Zeitschlitze (n, n+1), in denen ein nicht einwandfreies Datenpaket (I, II) empfangen worden ist, um wenigstens einen vorbestimmten Betrag das betreffende Zählergebnis oder den betreffenden Prozentsatz in der optimalen Situation übersteigt.

4. Verfahren nach einem der vorstehenden Ansprüche, **dadurch gekennzeichnet, dass** die Hauptstation (1) eine vorbestimmte Anzahl Bits in vorbestimmten Zeitschlitzen überträgt, und zwar zur Steuerung der Einstellung der Wahrscheinlichkeit p in jeder Nebenstation (3).

5. Verfahren nach einem der vorstehenden Ansprüche, **dadurch gekennzeichnet, dass** nicht mehr als ein einziges Bit in jedem Zeitschlitz als ein Bit eines Wahrscheinlichkeitseinstellbefehls wirksam ist.

6. Verfahren nach einem der vorstehenden Ansprüche, **dadurch gekennzeichnet, dass** der Inhalt der Wahrscheinlichkeitseinstellbits indikativ sind für einen Absolutwert der Wahrscheinlichkeit p.

7. Verfahren nach einem der vorstehenden Ansprüche, **dadurch gekennzeichnet, dass** ein Speicher mit jeder Nebenstation (3) assoziiert ist, wobei dieser Speicher eine Tabelle möglicher Werte der Wahrscheinlichkeit p speichert, und dass der Inhalt der Wahrscheinlichkeitseinstellbits indikativ sind für eine Position des einzustellenden Wahrscheinlichkeitswertes in der genannten Tabelle.

8. Kommunikationssystem, das die nachfolgenden Elemente umfasst:
eine Hauptstation (1) und wenigstens eine Nebenstation(3), wobei die Nebenstation (3) dazu vorgesehen ist, Information von der Hauptstation (1) zu empfangen sowie Information zu der Hauptstation (1) zu übertragen, wobei die Hauptstation (1) dazu vorgesehen ist, Information zu der Nebenstation (3) zu übertragen, sowie Information von der Nebenstation (3) zu empfangen; **dadurch gekennzeichnet, dass** die Hauptstation (1) und die wenigstens eine Nebenstation (3) dazu vorgesehen sind, miteinander zu kommunizieren, wobei das Verfahren der Datenübertragung nach einem der vorstehenden Ansprüche angewandt wird.

9. Verkehrsnavigationssystem, das die nachfolgenden Elemente umfasst: zur Verwendung an Bord eines Fahrzeugs (2) wenigstens eine Nebenstation (3) mit einem Navigationscomputer (4), wobei dieser Navigationscomputer (4) einen Festwertspeicher (5) aufweist, in dem Straßensysteminformation gespeichert ist; eine Hauptstation (1), vorgesehen zum Übertragen von Hilfsinformation und zum Empfangen von Information von wenigstens einer Nebenstation (3)1 wobei die Nebenstation (3) vorgesehen ist zum Empfangen der genannten Hilfsinformation und zum Übertragen von Information zu der Hauptstation (1); **dadurch gekennzeichnet, dass** die Hauptstation (1) und die wenigstens eine Nebenstation (3) zur Kommunikation miteinander vorgesehen sind, wobei das Verfahren der Datenübertragung implementiert wird, wie in den Ansprüchen 1 bis 7 beansprucht.

10. Nebenstation (3) zum Empfangen von Hilfsinformation aus einer Hauptstation (1) und zum Übertragen von Information zu der Hauptstation (1), **dadurch gekennzeichnet, dass** die Nebenstation (3) vorgesehen ist zum Kommunizieren mit der Hauptstation (1), während das Verfahren der Datenübertragung nach einem der Ansprüche 1 bis 7 implementiert wird.

11. Hauptstation (1) zum Übertragen von Information zu einer Nebenstation (3) sowie zum Empfangen von Information aus der Nebenstation (3), **dadurch gekennzeichnet, dass** die Hauptstation (1) zur Kommunikation mit der Nebenstation (3) vorgesehen ist, während das Verfahren der Datenübertragung nach einem der Ansprüche 1 bis 7 implementiert wird.

## Revendications

1. Procédé de transmission de données depuis une pluralité de sous-stations (3) à une station principale (1) au moyen d'un canal commun qui est subdivisé en tranches de temps (n, n+1) dont la durée et la synchronisation sont déterminées par une distribution de tranches de temps correspondante d'un signal de transmission de données transmis par la station principale (1), chaque sous-station (3) présentant dans chaque tranche de temps (n, n+1) une probabilité p prédéterminée à transmettre un paquet de données (I,II), **caractérisé en ce que** la station principale (1) surveille la charge du canal de communication et compare cette charge à une charge optimale et, sur la base du résultat de cette comparaison, transmet des instructions de commande aux sous-stations (3) pour modifier ladite probabilité p en réponse à la charge du canal de communication, et **en ce que** chaque sous-station (3) modifie en conséquence la probabilité p en réponse à la réception desdites instructions de commande.

2. Procédé suivant la revendication 1, **caractérisé en ce que** la station principale (1) détecte dans chaque tranche de temps (n, n+1) si un paquet de données (I,II) a été reçu ou non dans la tranche de temps (n, n+1) appropriée, et si tel est le cas, si le paquet de données (I,II) reçu dans la tranche de temps (n, n+1) appropriée a été reçu correctement ou non ; **en ce que** la station principale (1) pendant un laps de temps prédéterminé compte le nombre de tranches de temps (n, n+1) dans lesquelles aucun paquet de données, un paquet de données correct ou un paquet de données incorrect a été reçu respectivement ou calcule les pourcentages respectifs ; **en ce que** la station principale (1) compare les résultats du comptage ou les pourcentages aux résultats du comptage ou aux pourcentages respectifs tels qu'ils se présenteraient dans la situation d'une charge optimale du canal de communication, et **en ce que** la station principale (1) envoie lesdites instructions de commande sur la base du résultat de cette comparaison.

3. Procédé suivant la revendication 2, **caractérisé en ce que** lesdites instructions de commande incitent chaque sous-station (3) à accroître la valeur instantanée de la probabilité p si le résultat du comptage ou le pourcentage concernant le nombre de tranches de temps (n, n+1) dans lesquelles aucun paquet de données (I, II) n'a été reçu dépasse au moins dans une mesure prédéterminée le résultat du comptage ou le pourcentage approprié dans la situation optimale et/ou si le résultat du comptage ou le pourcentage concernant le nombre de tranches de temps (n, n+1) dans lesquelles un paquet de données (I,II) incorrect a été reçu est inférieur au moins dans une mesure prédéterminée au résultat du comptage ou au pourcentage approprié dans la situation optimale, et **en ce que** lesdites instructions de commande incitent chaque sous-station (3) à réduire la valeur instantanée de la probabilité p si le résultat du comptage ou le pourcentage concernant le nombre de tranches de temps (n, n+1) dans lesquelles aucun paquet de données (I, II) n'a été reçu est inférieur au moins dans une mesure prédéterminée au résultat du comptage ou au pourcentage approprié dans la situation optimale et/ou si le résultat du comptage ou le pourcentage concernant le nombre de tranches de temps (n, n+1) dans lesquelles un paquet de données (I, II) incorrect a été reçu dépasse au moins dans une mesure prédéterminée le résultat du comptage ou le pourcentage approprié dans la situation optimale.

4. Procédé suivant l'une quelconque des revendications précédentes, **caractérisé en ce que** la station principale (1) transmet un nombre prédéterminé de bits dans des tranches de temps prédéterminées de manière à commander l'ajustement de la probabilité p dans chaque sous-station (3).

5. Procédé suivant l'une quelconque des revendications précédentes, **caractérisé en ce que** pas plus d'un bit dans chaque tranche de temps ne sert de bit d'une commande d'ajustement de probabilité.

6. Procédé suivant l'une quelconque des revendications précédentes, **caractérisé en ce que** le contenu des bits d'ajustement de probabilité est indicatif d'une valeur absolue de la probabilité p.

7. Procédé suivant l'une quelconque des revendications précédentes, **caractérisé en ce qu'**une mémoire est associée à chaque sous-station (3), laquelle mémoire mémorise une table de valeurs possibles de la probabilité p, et **en ce que** le contenu des bits d'ajustement de probabilité est indicatif d'une position dans ladite table de la valeur de probabilité p à ajuster.

8. Système de communication comprenant : une station principale (1) et au moins une sous-station (3), la sous-station (3) étant propre à recevoir des informations de la station principale (1) ainsi qu'à envoyer des informations à la station principale (1), la station principale (1) étant propre à envoyer des informations à la sous-station (3) ainsi qu'à recevoir des informations de la sous-station (3), **caractérisé en ce que** la station principale (1) et la au moins une sous-station (3) sont propres à communiquer l'une avec l'autre tout en mettant en oeuvre le procédé de transmission de données suivant l'une quelconque des revendications précédentes.

9. Système de navigation routière comprenant : pour utilisation à bord d'un véhicule (2) au moins une sous-station (3) équipée d'un ordinateur de navigation (4), l'ordinateur de navigation (4) comprenant une mémoire statique (5) dans laquelle des informations sur le réseau routier sont mémorisées ; une station principale (1) propre à transmettre des informations auxiliaires et à recevoir des informations de la au moins une sous-station (3) ; la sous-station (3) étant propre à recevoir lesdites informations auxiliaires et à envoyer des informations à la station principale (1), **caractérisé en ce que** la station principale (1) et la au moins une sous-station (3) sont propres à communiquer l'une avec l'autre tout en mettant en oeuvre le procédé de transmission de données suivant l'une quelconque des revendications 1 à 7.

10. Sous-station (3) pour recevoir des informations auxiliaires d'une station principale (1) et pour envoyer des informations à la station principale (1), **caractérisée en ce que** la sous-station (3) est propre à communiquer avec la station principale (1) tout en mettant en oeuvre le procédé de transmission de données suivant l'une quelconque des revendications 1 à 7.

11. Station principale (1) pour envoyer des informations à une sous-station (3) ainsi que pour recevoir des informations de la sous-station (3), **caractérisée en ce que** la station principale (1) est propre à communiquer avec la sous-station (3) tout en mettant en oeuvre le procédé de transmission de données suivant l'une quelconque des revendications 1 à 7.
